# EUROPEAN PATENT SPECIFICATION

(11) **EP 3 882 219 B1**
(45) Date of publication and mention of the grant of the patent: **09.10.2024**
(21) Application number: 20164068.7
(22) Date of filing: 19.03.2020
(51) Int. Cl.: C02F 1/463, C02F 1/461, C02F 101/10, C02F 3/12, C02F 103/00

(54) **ELECTROLYSIS PHOSPHATE PRECIPITATION MODULE**
ELEKTROLYSEPHOSPHATAUSFÄLLUNGSMODUL
MODULE DE PRÉCIPITATION DE PHOSPHATE PAR ÉLECTROLYSE

(43) Date of publication of application: 22.09.2021
(73) Proprietor: Europhat Sverige AB, 312 53 Hishult (SE)
(72) Inventor: Lauer, Dirk, 275 68 Vollsjö (SE); Anderegg, Reto Robert, 312 53 Hishult (SE)
(74) Representative: Hansson Thyresson AB

(56) References cited:
- JP-A- H10 258 288
- JP-A- H11 277 090
- JP-A- S49 109 269
- US-A1- 2009 321 251
- US-A1- 2010 051 542
- US-A1- 2014 001 120

## Description

### TECHNICAL FIELD

The present invention relates to a phosphate precipitation module, an aggregate of such modules, a use of such module or aggregate and a method for precipitating phosphate from water.

### BACKGROUND

Wastewater and sewage must be purified before it is released into the nature. This is commonly made in a wastewater treatment plant, but houses and buildings not connected to a common sewerage must purify the wastewater in close connection to the house or building. This may for example be done in a septic tank or similar.

The phosphorus and nitrogen content of the wastewater provides a nutrient basis for an often uncontrollable algae growth and overfertilization. Therefore, with every wastewater treatment it is important to lower the phosphorus content, since a precipitation of the phosphorus from the wastewater is an efficient and practical way of influencing the resulting formation of algae in natural waters. So far, phosphorus and phosphates have been precipitated from the wastewater in a chemical treatment stage by adding chemical precipitants, for example iron salts or lime, which on the one hand entails high costs for the chemicals and on the other hand additionally pollutes the water with the chemicals.

Another way of removing phosphate is by means of electrolysis, which is disclosed in e.g. EP 0 605 675 B1. However, existing phosphate removal systems of this kind are often adapted for larger plants. The systems are not adapted for installation in individual drains and sewages, e.g. septic tanks, which means that phosphate is not removed in such amounts to fulfill statutory requirements.

There is a need for effective phosphate removal also in smaller sewages, and without the need of adding chemicals.

From the above it is understood that there is room for improvements and the invention aims to solve or at least mitigate the above and other problems.

JP H11 277090 A discloses a waste water treatment equipment comprising flat plate electrodes.

US 2014/001120 A1 discloses an apparatus for treating wastewater comprising flat plate electrodes.

US 2009/321251 A1 discloses an electrochemical system for treatment of water comprising multiple pairs of electrodes.

JP H10 258288 A discloses a sewage treatment apparatus comprising flat plate electrodes.

JP S49 109269 A discloses a water treatment equipment comprising plate electrodes.

US 2010/051542 A1 discloses a wastewater treatment system comprising cylindrical electrodes.

### SUMMARY

The invention is defined by the appended independent claims. Additional features and advantages of the concepts disclosed herein are set forth in the description which follows, and in part will be obvious from the description, or may be learned by practice of the described technologies. The features and advantages of the concepts may be realized and obtained by means of the instruments and combinations particularly pointed out in the appended claims. These and other features of the described technologies will become more fully apparent from the following description and appended claims, or may be learned by the practice of the disclosed concepts as set forth herein.

In a first aspect a phosphate precipitation module is provided. The module comprises a first and a second electrode, an electrical power supply unit providing a DC voltage, and a control unit configured to alternate the polarity between the first and the second electrode. The electrodes comprise a pair of hollow tubes comprising openings for allowing a flow of water therethrough. The electrical power supply is connected to the respective electrodes by means of electrical power transfer means. The electrical power transfer means is soldered onto the respective electrodes. The solder joint is performed in a water resistant manner by means of a shrink tube cuff arranged on an upper portion of each electrode. The first and the second electrodes are connected by means of a bar made of a non-conductive material.

This module is advantageous in that it effectively precipitates phosphate from wastewater to be purified. Since the control unit is configured to alternate the polarity between the electrodes, both electrodes function as cathode and anode alternatingly. This provides the module with a longer lifetime, since both electrodes are equally worn. Also, by alternating the polarity, precious metals are prevented from attaching to the electrodes, which may impair the phosphate precipitation.

The design of the electrodes is advantageous since the electrodes are provided with a large surface area, which contributes to a more efficient precipitation of phosphate.

In one embodiment, the electrodes are made of one of diamond or metal, preferably of iron, stainless steel or titanium. Iron is a beneficial material in that it is cost efficient. Diamond is advantageous in that it is durable.

The openings for allowing a flow of water therethrough improves the flow of water around the module, which increases the phosphate precipitation in the water.

Soldering of the electrical power transfer means is advantageous compared to a more common way of fastening the transfer means by means of screwing them onto a cable shoe, or lug. By soldering the power transfer means to the electrodes, a more efficient power transmission is obtained.

The solder joint performed in a water resistant manner improves the power transmission further. A water resistant solder joint is beneficial in that the iron which the power transmission means are connected to do not rust. If rust is formed between the electrode and the power transmission means, the power connection is lost. It is therefore beneficial to protect the soldering joint from water.

In one embodiment, the module is arrangeable in a drain, in an individual sewage or drain, in a sewage treatment plant, in a container comprising built-in sewage treatment, in a separate tank for phosphate precipitation, in a two-chamber septic tank, or a three-chamber septic tank. It is advantageous that the module is designed to be arrangeable in an individual sewage, which may comprise any of the above alternatives.

The electrical voltage being a DC voltage provides for an efficient electrolysis which forms the basis for the phosphate precipitation.

The DC voltage may be between 22 and 26 V, with a current of between 1.0 and 160 A. This provides for a low energy consumption, rendering the module energy efficient, yet providing an efficient phosphate removal from the wastewater.

The time period by which the control unit is configured to change the polarity between the first and second electrode may be every 6-8 hours, preferably every 2-3 hours, more preferably every 1.5 hours, and most preferred every 100 minutes. This has turned out to be efficient time intervals for prolonging the lifetime of the electrodes, which makes the module more cost efficient. Also, it requires less maintenance since each module lasts longer before it needs to be exchanged.

In a second aspect, an aggregate is provided, comprising at least two or more modules according to the appended claims 1 to 4 for arrangement in water to be purified from phosphate. This is beneficial if the capacity of one module is not enough for the intended amount of water to be purified.

In a third aspect, a use of a module, or an aggregate according to the appended claims 1 to 5 for precipitating phosphate from water is provided.

In a fourth aspect, a method for precipitating phosphate from water is provided. The method comprises the steps of:
- arranging a module or an aggregate according to the appended claims 1 to 5 in water to be purified;
- providing a DC voltage to the module such that electrolysis occurs in the water;
- after a predetermined time period, switching the polarity between the first and the second electrode, respectively; and
- repeating the step of switching the polarity after predetermined time periods such that both electrodes are used alternatingly as a cathode.

This is an advantageous method in that it effectively precipitates phosphate from the water, and in that it prolongs the lifetime of the phosphate precipitating module, since both electrodes are equally worn.

The method may further comprise a step of removing the phosphate compound from the water. This step completes the water purification, as the phosphate compound is removed from the treatment system.

### BRIEF DESCRIPTION OF THE DRAWINGS

Embodiments of the invention will be described in the following; references being made to the appended diagrammatical drawings which illustrate nonlimiting examples of how the inventive concept can be reduced into practice.
Fig. 1 is a schematic view of a treatment plant for purifying wastewater;
Fig. 2 is a perspective side view of a phosphate precipitation module according to the present invention,
Fig. 3 is a perspective side view of a phosphate precipitation module according to one example not part of the present invention,
Fig. 4 is a schematic side view of a three-chamber septic tank provided with a phosphate precipitation module;
Fig. 5 is a schematic top view of the septic tank in Fig. 4;
Fig. 6 is a schematic side view of a two-chamber septic tank provided with a phosphate precipitation module; and
Fig. 7 is a schematic side view of a water treatment plant comprising a separate phosphate precipitation tank provided with a phosphate precipitation module.

### DETAILED DESCRIPTION

Hereinafter, certain examples will be described more fully with reference to the accompanying drawings.

The invention relates to a module and a method for lowering the phosphorus content in wastewater, which is carried out in a cleaning cycle over individual treatment tanks, such as primary settling tanks, aeration tanks, secondary settling tanks or the like.

By the technique presented herein, wastewater is subjected to electrolysis in one of the treatment tanks, preferably in the aeration tank, by means of metal electrodes and an electrical direct voltage. If an electric field builds up in the wastewater, the electrode reactions and the ion migration lead to chemical changes which result in a surprisingly strong precipitation of phosphorus, with the phosphorus being enriched in the sewage sludge, which may be withdrawn from the cleaning cycle together with the excess sludge. The remaining portion of the phosphorus is preferably biodegraded in the aeration tanks by microorganisms, so that a reduction of the phosphorus content in the wastewater to a desired extent can be ensured in an environmentally friendly manner without the addition of chemicals.

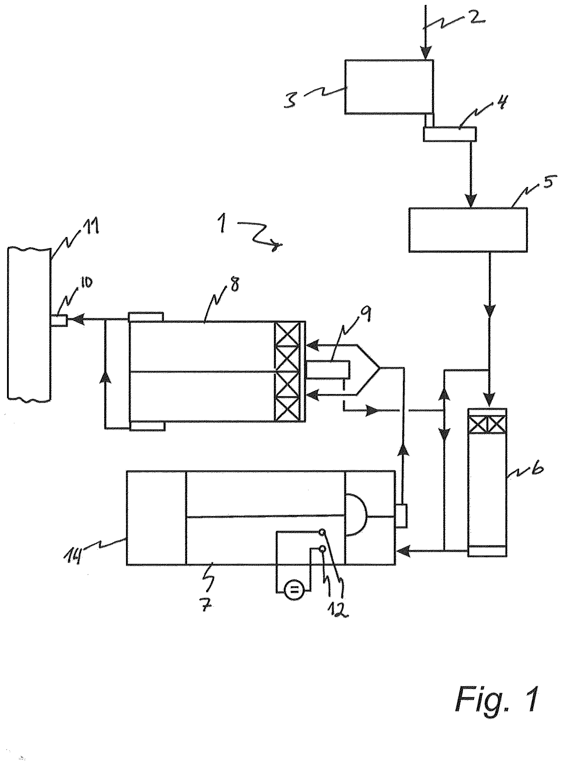

In Fig. 1, a wastewater treatment plant 1 is shown. The wastewater is subjected to a cleaning cycle, whereby it is conducted via an inlet 2, a rain basin 3, an inlet screw pump 4, a rake and sand trap 5, a primary settling tank 6, an aeration tank 7 and a secondary settling tank 8. A return sludge screw pump 9 conveys the sludge from the secondary settling tank 8 back into the cleaning circuit, partially before and partially after the primary settling tank 6, and the treated water passes from the secondary settling tank 8 via an outlet 10 into a soak away or dry well 11. In the aeration tank 7, an electrolysis phosphate precipitation module 12 connected to a direct current source 13 is immersed into the wastewater and allow the establishment of an electric field. The electrolysis phosphate precipitation module 12 will be described in more detail below

The wastewater fed into the sewage treatment plant 1, after the mechanical cleaning through the rake and sand trap 5, reaches the primary settling tank 6, where a denitrification takes place and most of the suspended matter settles out. This primary sludge is taken, together with the excess sludge recycled from the secondary settling tank 8, to be further processed in thickeners and digesters which are not shown or further described herein.

The mechanically cleaned and denitrified wastewater flows from the primary settling tank 6 into the aeration tank 7, where it is subjected to electrolysis by means of the electrolysis phosphate precipitation module 12, which is under a direct voltage, which leads to an efficient and effective phosphorus precipitation. The remaining portion of the phosphorus and organic substances still contained are further broken down in the aeration tank 7 by microorganisms, with aeration devices 14 ensuring the corresponding supply of oxygen. The sludge-water mixture flowing out of the aeration tank 7 is passed into the secondary settling tank 8, in which the residual sludge settles, and the now also biologically cleaned wastewater reaches the drywell 11 from the secondary settling tank 8 via outlet 10.

Approximately half of the sludge from the secondary settling tank 8 is fed back, via the return sludge screws 9, into the primary settling tank 6 and the other approximately half into the aeration tank 7, which closes the sludge cycle and achieves the desired degree of purification.

The electrolysis in the purification method only needs to be carried out in one stage. Despite one-step separation, a separation success of over 90% is achieved.

It has proven advantageous to carry out the electrolysis in the aeration tank. At the same time, biological processes occur in this tank, which in turn promote the separation of phosphates. This embodiment of the method is based on the knowledge that electrolytic and biological processes for separating phosphate influence each other synergistically and lead to increased separation of phosphate. Naturally, the temperature of the activated sludge should not be too high during electrolysis in the aeration tank in order not to kill the existing bacteria. It has been shown that the process according to the invention permits phosphate precipitation of over 90% even at ambient temperatures. In this variant of the method, it is possible to carry out the electrolysis with a current density of less than 0.05 A/dm² electrode surface at a voltage of approximately 22-26 V, preferably of approximately 24 volts. The method therefore requires extremely small amounts of electrical energy.

The temperature of the activated sludge (mixture of the discharge from the primary settling tank 6 and return sludge from the secondary settling tank 8) in the aeration tank 7 should be below 45°C. External heating of the activated sludge in the aeration tank 7 to temperatures above 40°C is not necessary. The activated sludge usually flows in from the primary settling tank 6 at a temperature in the range from approximately 4°C (in winter) to 25°C (in summer).

It has been shown that the phosphate precipitation works particularly well when the phosphate is present as orthophosphate in the wastewater.

In one embodiment, the bottom and/or the walls of the aeration tank is/are designed to be electrically conductive. In this embodiment, the bottom and/or the walls function as cathode and only the anode is provided to be submerged in the aerated sludge.

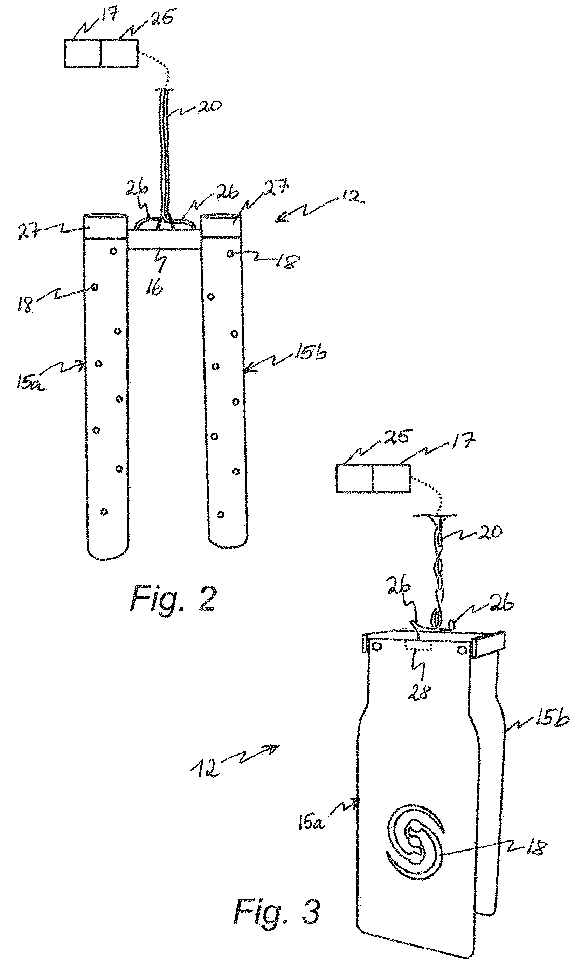

With reference to Figs 2-3, the electrolysis phosphate precipitation module 12 will be more thoroughly described. In a first embodiment according to the present invention, shown in Fig. 2, the precipitation module 12 comprises a first 15a and a second 15b hollow tube, connected by means of a bar 16. The bar 16 is made of polyethylene, but in other embodiment, the bar 16 could be made of any non-conductive material.

The tubes are in this embodiment made of metal, preferably of iron. However, other materials may be used as well. For example, titanium, industrial diamond, or stainless steel may be used. Iron is preferred for smaller modules, adapted for individual drains, due to its lower cost. Industrial diamonds are preferred in larger modules, adapted for municipal installations, due to its long durability. Aluminum may also be used, however with care, due to its environmental impact.

Each hollow tube 15a, 15b is provided with openings 18, the advantage of which will be further described below. The module 12 further comprises a CPU or control unit 25.

An electric power supply unit 17 is arranged to apply a DC voltage to the tubes 15a, 15b. The electrical power supply unit 17 is connected to the tubes 15a, 15b by means of electric power transfer means 26, which may be electrical wires or cables. The tubes 15a, 15b thus work as electrodes, and are referred to as such below. The CPU 25 is in operative connection with the electrical power supply unit 17.

The electrical power transfer means 26 are soldered onto the first 15a and second 15b tubes, respectively. The solder joint is performed in a water resistant manner. This is accomplished by arranging a shrink tube 27 as a cuff on an upper portion of each tube 15a, 15b. The electrical power transfer means 26 connect to the respective tube 15a, 15b within the shrink tube 27 cuff. Thus, the connection is protected from water. This arrangement provides a water resistant connection. In one embodiment, the height of the shrink tube 27 cuff is approximately 5 cm.

The voltage applied is preferably in the range of 22-26V, with a current of 1.0-160A, depending on the amount of water to be treated. The DC voltage is supplied such that one of the tubes 15a is a cathode, and the other tube 15b is an anode.

Another embodiment, not according to the invention, of the module 12 is shown in Fig. 3. Only the features differing between the embodiments are described. In this embodiment, the module 12 comprises a first plate 15a and a second plate 15b. Each plate 15a, 15b is provided with one or more opening 18. In the shown embodiment, each plate 15a, 15b is provided with one opening 18, but in other embodiments, it may be any suitable number of openings, of any suitable shape. As in the previous embodiment, the electrical power supply unit 17 is soldered onto each respective plate 15a, 15b such that one plate 15a functions as cathode and the other 15b as anode.

In order to accomplish a water resistant solder joint, each plate 15a, 15b is provided with a recess 28. The electric power transfer means 26 are soldered to the respective plates 15a, 15b within the respective recess 28. Thereafter, the recesses 28 are filled with a sealing compound comprising polyurethane. This provides a water resistant seal such that the soldering joint is not exposed to water.

The purification capacity of one module 12 is adapted for an individual household. In order to arrange for a larger volume of water to be purified, several modules 12 may be connected, or used together as an aggregate arrangement. This is useful e.g. if two households share an individual sewage or septic tank. In this case, the modules 12, each comprising two electrodes 15a, 15b are connected in series after each other.

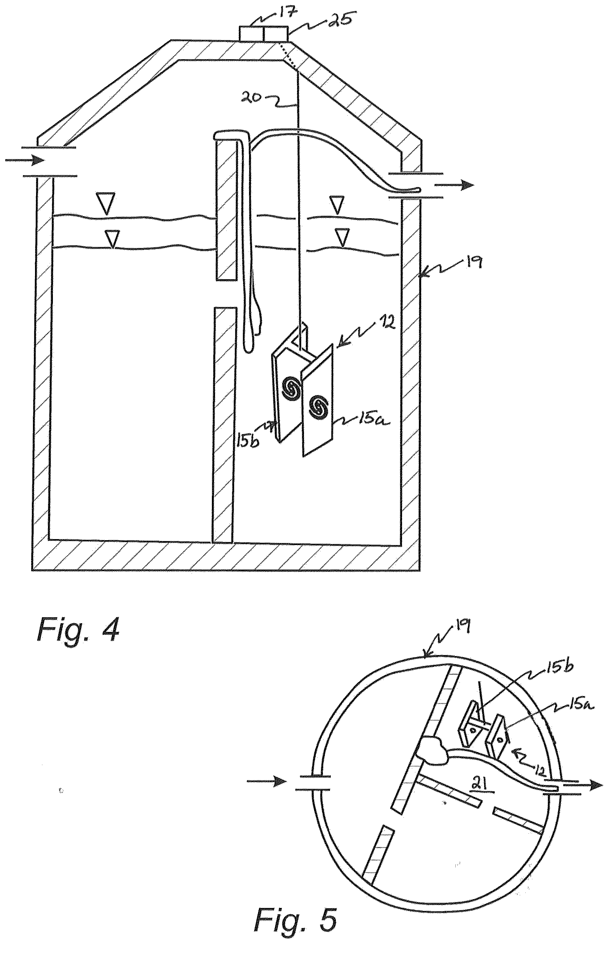

Figs 4-7 shows the module 12 installed in different scenarios. Figs 4-5 show a module 12 installed in a three-chamber septic tank 19. The septic tank is conventional and will not be described in more detail herein. The module 12 is suspended in a chain, string or wire 20 such that it is submerged in the wastewater to be treated. The module 12 is arranged in the third and last chamber 21 of the three-chamber septic tank 19, where the water already has been filtered from larger particles.

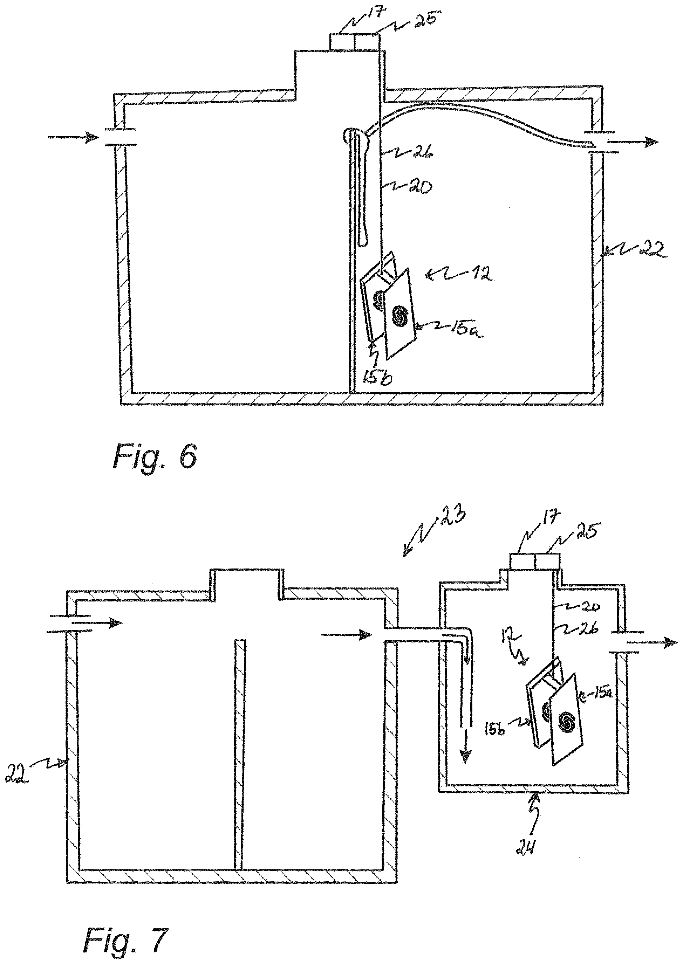

In Fig. 6, the module 12 is arranged in a two-chamber septic tank 22. The module 12 is arranged in the second and last chamber, where larger particles have been filtered from the water.

In Fig. 7, the module 12 is arranged in a treatment plant 23 comprising a two-chamber septic tank 22 and a separate tank 24 for phosphate precipitation. The module 12 is arranged in the separate tank 24.

In use, the module 12 is arranged 30 to be submerged in water to be purified e.g. of phosphate. The DC voltage is applied 31 to the electrodes which causes precipitation of phosphate from the water. The openings 18 provided in the electrodes 15a, 15b causes a better circulation of water and an improved precipitation of phosphate.

The control unit 25 is configured to shift or switch 32 the polarity of the applied DC voltage between the first 15a and second 15b electrode after a predetermined time period. Thus, both electrodes 15a, 15b work alternately as cathode and anode, and thus they are more equally worn. The lifetime of the module 12 is thus extended. The polarity change also prevents precious metals present in the water from attaching to the electrodes 15a, 15b. The precipitation efficiency of the module 12 is thus increased. The step of switching the polarity is repeated 33 at predetermined time intervals. Suitable time intervals for changing the polarity between the electrodes 15a, 15b is every 6-8 hours, preferably every 2-3 hours, more preferably every 1.5 hours, and most preferred every 100 minutes. The more often the polarity is changed, the less amount of noble metals are accumulated on the negative electrode.

When enough phosphate is precipitated, the phosphate composition sedimented on the bottom of the tank is removed 34.

Tests have been performed on the electrolysis phosphate precipitation module 12 in order to determine the achieved precipitation. In a test system installation, the module 12 was submerged in water containing phosphate in an amount of 4.6-7.0 µg/l, in average, the phosphate amount was 5.7 µg/l. The water purified in the test system turned out to contain in average 0.5 µg phosphate / liter of water. This renders a phosphate removal of 89-93%. The recommendation for phosphate removal in individual sewages in Sweden is 70% for normal level of ground protection and 90% for high level of ground protection. The inventive module thus fulfills these recommendations.

The size of the electrodes 15a, 15b of the module 12 varies depending on the volume of water to be treated. As an example, the vertical height of the electrodes 15a, 15b is approximately 0.3-1 m, preferably approximately 0.5-0.8 m, and most preferred approximately 0.6 m. The horizontal length of the electrodes 15a, 15b is e.g. approximately 0.15-0.5 m, preferably approximately 0.2-0.3 m, and most preferred approximately 0.25 m.

In other examples not part of the present invention, the module 12 may be used to purify water from other particles or substances as well. By changing the DC voltage, other substances may be captured. For example, noble metals may be accumulated on the negative electrode, which is exchanged after a certain amount of time.

The tanks 19, 22, 23 24 referred to above may be of plastic or concrete, or any other suitable material.

In other examples not part of the present invention, the module 12 may comprise two or more web or grid plates as electrodes, or any other suitable electrode shape.

## Claims

1. Phosphate precipitation module, the module (12) comprising a first (15a) and a second (15b) electrode, an electrical power supply unit (17) providing a DC voltage, and a control unit (25) configured to alternate the polarity between the first (15a) and the second (15b) electrode, wherein the electrodes (15a, 15b) are pair of hollow tubes, each tube comprising openings (18) for allowing a flow of water therethrough, **characterized in that** the electrical power supply (17) is connected to the respective electrodes (15a, 15b) by means of electrical power transfer means (26), wherein the electrical power transfer means (26) is soldered onto the respective electrodes (15a, 15b), **in that** the solder joint is performed in a water resistant manner by means of a shrink tube cuff (27) arranged on an upper portion of each electrode (15a, 15b), wherein the electrical power transfer means (26) connect to the respective electrode (15a, 15b) within the shrink tube cuff (27) and **in that** the first (15a) and the second (15b) electrodes are connected by means of a bar (16) made of a non-conductive material.

2. The module according to claim 1, wherein the electrodes (15a, 15b) are made of one of diamond or metal, preferably of iron, stainless steel or titanium.

3. The module according to claim 1, wherein the DC voltage is between 22 and 26 V, with a current of between 1.0 and 160 A.

4. The module according to any one of the preceding claims, wherein the time period by which the control unit (25) is configured to change the polarity between the first and second electrode is every 6-8 hours, preferably every 2-3 hours, more preferably every 1.5 hours, and most preferred every 100 minutes.

5. Aggregate comprising at least two or more modules (12) according to any one of the preceding claims for arrangement in water to be purified from phosphate.

6. Use of a module according to any one of claims 1-4, or an aggregate according to claim 5 for precipitating phosphate from water.

7. Method for precipitating phosphate from water, the method comprising the steps of:
- arranging (30) a module (12) according to claims 1-4, or an aggregate according to claim 5, in water to be purified;
- providing (31) a DC voltage to the module (12), such that electrolysis occurs in the water;
- after a predetermined time period, switching (32) the polarity between the first (15a) and the second (15b) electrode, respectively; and
- repeating (33) the step of switching the polarity after predetermined time periods such that both electrodes (15a, 15b) are used alternatingly as a cathode.

8. The method according to claim 7, further comprising a step of removing (34) the phosphate compound from the water.

## Patentansprüche

1. Phosphatausfällungsmodul, das Modul (12) umfassend eine erste (15a) und eine zweite (15b) Elektrode, eine elektrische Energieversorgungseinheit (17), die eine Gleichspannung bereitstellt, und eine Steuereinheit (25), die konfiguriert ist, um die Polarität zwischen der ersten (15a) und der zweiten (15b) Elektrode zu wechseln, wobei die Elektroden (15a, 15b) ein Paar Hohlrohre sind, jedes Rohr umfassend Öffnungen (18), zum Ermöglichen eines Wasserflusses dahindurch, **dadurch gekennzeichnet, dass** die elektrische Energieversorgungseinheit (17) mittels eines elektrischen Energieübertragungsmittels (26) mit den jeweiligen Elektroden (15a, 15b) verbunden ist, wobei das elektrische Energieübertragungsmittel (26) auf die jeweiligen Elektroden (15a, 15b) gelötet ist, **dadurch, dass** die Lötstelle auf eine wasserfeste Weise mittels einer Schrumpfschlauchmanschette (27) durchgeführt ist, die an einem oberen Abschnitt jeder Elektrode (15a, 15b) angeordnet ist, wobei das elektrische Energieübertragungsmittel (26) mit der jeweiligen Elektrode (15a, 15b) innerhalb der Schrumpfschlauchmanschette (27) verbunden ist, und **dadurch, dass** die erste (15a) und die zweite (15b) Elektrode mittels einer Stange (16), die aus einem nichtleitenden Material hergestellt ist, verbunden sind.

2. Modul nach Anspruch 1, wobei die Elektroden (15a, 15b) aus eines von Diamant oder Metall, vorzugsweise aus Eisen, rostfreiem Stahl oder Titan hergestellt sind.

3. Modul nach Anspruch 1, wobei die Gleichspannung zwischen 22 und 26 V liegt, mit einem Strom zwischen 1,0 und 160 A.

4. Modul nach einem der vorstehenden Ansprüche, wobei der Zeitraum, in der die Steuereinheit (25) konfiguriert ist, um die Polarität zwischen der ersten und der zweiten Elektrode zu ändern, alle 6 bis 8 Stunden, vorzugsweise alle 2 bis 3 Stunden, mehr bevorzugt alle 1,5 Stunden und am meisten bevorzugt alle 100 Minuten beträgt.

5. Aggregat, umfassend mindestens zwei oder mehr Module (12) nach einem der vorstehenden Ansprüche für eine Anordnung in Wasser, das von Phosphat zu reinigen ist.

6. Verwendung eines Moduls nach einem der Ansprüche 1 bis 4 oder eines Aggregats nach Anspruch 5 zum Ausfällen von Phosphat aus Wasser.

7. Verfahren zum Ausfällen von Phosphat aus Wasser, das Verfahren umfassend die Schritte:
- Anordnen (30) eines Moduls (12) nach den Ansprüchen 1 bis 4 oder eines Aggregats nach Anspruch 5 in Wasser, das zu reinigen ist;
- Bereitstellen (31) einer Gleichspannung an das Modul (12), derart, dass in dem Wasser eine Elektrolyse stattfindet;
- nach einem vorbestimmten Zeitraum, Umschalten (32) der Polarität zwischen der ersten (15a) beziehungsweise der zweiten (15b) Elektrode; und
- Wiederholen (33) des Schritts des Umschaltens der Polarität nach vorbestimmten Zeiträumen, derart, dass beide Elektroden (15a, 15b) abwechselnd als eine Kathode verwendet werden.

8. Verfahren nach Anspruch 7, ferner umfassend einen Schritt eines Entfernens (34) der Phosphatverbindung aus dem Wasser.

## Revendications

1. Module de précipitation de phosphate, le module (12) comprenant une première (15a) et une seconde (15b) électrode, une unité d'alimentation en puissance électrique (17) fournissant une tension CC, et une unité de commande (25) configurée pour alterner la polarité entre la première (15a) et la seconde (15b) électrode, dans lequel les électrodes (15a, 15b) sont une paire de tubes creux, chaque tube comprenant des ouvertures (18) destinées à permettre un écoulement d'eau à travers celles-ci, **caractérisé en ce que** l'alimentation en puissance électrique (17) est connectée aux électrodes (15a, 15b) respectives à l'aide de moyens de transfert de puissance électrique (26), dans lequel le moyen de transfert de puissance électrique (26) est soudé sur les électrodes (15a, 15b) respectives, **en ce que** le joint de soudure est mis en oeuvre d'une manière résistante à l'eau à l'aide d'un manchon tubulaire rétractable (27) agencé sur une partie supérieure de chaque électrode (15a, 15b), dans lequel les moyens de transfert de puissance électrique (26) se connectent à l'électrode (15a, 15b) respective au sein du manchon tubulaire rétractable (27) et **en ce que** les première (15a) et seconde (15b) électrodes sont connectées à l'aide d'une barre (16) constituée d'un matériau non conducteur.

2. Module selon la revendication 1, dans lequel les électrodes (15a, 15b) sont constituées de l'un parmi du diamant ou un métal, de préférence du fer, de l'acier inoxydable ou du titane.

3. Module selon la revendication 1, dans lequel la tension CC est comprise entre 22 et 26 V, avec un courant compris entre 1,0 et 160 A.

4. Module selon l'une quelconque des revendications précédentes, dans lequel le laps de temps selon lequel l'unité de commande (25) est configurée pour changer la polarité entre la première et la seconde électrode est toutes les 6 à 8 heures, de préférence toutes les 2 à 3 heures, plus préférablement chaque 1,5 heure, et le plus préférablement toutes les 100 minutes.

5. Agrégat comprenant au moins deux modules (12) ou plus selon l'une quelconque des revendications précédentes pour agencement dans de l'eau à purifier du phosphate.

6. Utilisation d'un module selon l'une quelconque des revendications 1 à 4, ou d'un agrégat selon la revendication 5 permettant de précipiter du phosphate dans de l'eau.

7. Procédé permettant de précipiter du phosphate dans de l'eau, le procédé comprenant les étapes consistant à :
- agencer (30) un module (12) selon les revendications 1 à 4, ou un agrégat selon la revendication 5, dans de l'eau à purifier ;
- fournir (31) une tension CC au module (12), de telle sorte qu'une électrolyse se produit dans l'eau ;
- après un laps de temps prédéterminé, commuter (32) la polarité entre la première (15a) et la seconde (15b) électrode, respectivement ; et
- répéter (33) l'étape de commutation de la polarité après des laps de temps prédéterminés de telle sorte que l'une et l'autre des électrodes (15a, 15b) sont utilisées en alternance en guise de cathode.

8. Procédé selon la revendication 7, comprenant en outre une étape consistant à éliminer (34) le composé phosphate de l'eau.
